# EUROPEAN PATENT APPLICATION

(11) **EP 4 782 394 A1**
(43) Date of publication of application: **29.07.2026**
(21) Application number: 25305085.0
(22) Date of filing: 23.01.2025
(51) Int. Cl.: C01B 3/50, C01B 3/34, C01B 3/12, F25J 3/02, F25J 3/06

(54) **CRYOGENIC RECOVERY OF CARBON DIOXIDE FROM A HYDROGEN MANUFACTURING PLANT**

(71) Applicant: Technip Energies France, 92741 Nanterre Cedex (FR)
(72) Inventor: VOVARD, Sylvain, 92741 Nanterre Cedex (FR); ELSEVIERS, Wim Frans, 92741 Nanterre Cedex (FR); KALOUTSI, Marianna, 92741 Nanterre Cedex (FR); PARADOWSKI, Henri, 92741 Nanterre Cedex (FR)
(74) Representative: Edson, Russell Gregory

(57) **Abstract**

The present disclosure relates generally to methods and systems for the generation of high purity hydrogen with the cryogenic recovery of carbon dioxide (CO₂). The disclosure can involve an integrated system to make hydrogen in a hydrogen manufacturing unit and separate process gases containing CO₂ and various other gases with integrated dryer adsorber vessel regeneration to achieve moderate to high capture rates of CO₂. In addition, but not by way of limitation, this disclosure relates to methods to reduce the carbon footprint and improve process efficiencies in a hydrogen manufacturing unit or process with CO₂ removal.

## Description

### Technical Field

The present disclosure relates generally to methods and systems for the generation of high purity hydrogen with the cryogenic recovery of carbon dioxide (CO₂). The disclosure can involve an integrated system to make hydrogen in a hydrogen manufacturing unit and separate process gases containing CO₂ and various other gases with integrated dryer regeneration to achieve moderate to high capture rates of CO₂. In addition, but not by way of limitation, this disclosure relates to methods to reduce the carbon footprint and improve process efficiencies in a hydrogen manufacturing unit or process with CO₂ removal.

### Background

Hydrogen manufacturing units based on the reforming of hydrocarbons with steam is a large emitter of CO₂ generated from the conversion and combustion of the hydrocarbon feeds. Reduction and capture of CO₂ from process streams in a hydrogen manufacturing unit is therefore of great interest in order to combat climate change by minimizing the release of greenhouse gases. Recovery of the CO₂ from process gas streams in a hydrogen manufacturing unit can be achieved through a number of different technologies at different process locations in the unit. One technology and location that is gaining attention is the removal of the CO₂ from a process gas (e.g., containing CO₂, CO, H₂, light hydrocarbons, water, and/or inert gases) at a single flowsheet location in the hydrogen purification block using cryogenic technology. However, improved methods of reducing the carbon footprint and improving process efficiencies for CO₂ removal from hydrogen manufacturing unit process gases are desirable.

### Summary

One or more embodiments involve a method for processing a stream comprising residual CO₂ and at least one of H₂, Helium, CO, CH₄, N₂, Argon, or any combinations thereof, comprising: (a) dividing said stream into at least a first part and a second part, (b) using the first part as a regeneration gas for an adsorption process to regenerate an adsorber vessel loaded with adsorbed water by desorbing the adsorbed water into a spent regeneration gas stream, (c) recovering the spent regeneration gas stream as a feed to a plant applying a reforming reaction that converts CH₄ with CO₂ and/or H₂O into H₂ and CO, or a water gas shift section that converts CO and H₂O into H₂ and CO₂, or any combination thereof, (d) heating the regeneration gas or the spent regeneration gas stream, or any combination thereof with residual heat from the plant using said reforming and/or water gas shift reactions, and (e) recovering said second part of the stream.

One or more embodiments relate to the above embodiments, wherein the adsorption process is a Temperature Swing Adsorption [TSA] process.

One or more embodiments relate to the above embodiments, wherein the adsorption process contains at least two adsorber vessels, of which at least one adsorber vessel is in regeneration, and comprises: (a) routing the first part of the stream comprising residual CO₂ as regeneration gas to bypass the adsorber vessel in regeneration (when the adsorber vessel in regeneration is to be heated), heating the regeneration gas with residual heat from the plant, and feeding the hot regeneration gas to the adsorber vessel in regeneration (when the adsorber vessel in regeneration is to be heated), collecting the spent regeneration gas and routing the spent regeneration gas to the reforming or water gas shift sections or combinations thereof via dedicated passageways; (b) routing the first part of the stream comprising residual CO₂ as regeneration gas to enter the adsorber vessel in regeneration (when the adsorber vessel in regeneration is to be cooled), collecting the spent regeneration gas, and routing the heated spent regeneration gas to the reforming or water gas shift sections or combinations thereof via dedicated passageways after heating the spent regeneration gas with residual heat from the plant; (c) optionally completely bypassing the adsorber vessel in regeneration, routing the first part of the stream comprising residual CO₂ directly to be heated, and then routing the heated first part of the steam comprising residual CO₂ to the reforming or water gas shift sections or combinations thereof, via dedicated passageways (when the adsorber vessel in regeneration is idle); (d) using the same dedicated passageways to the reforming or water gas shift sections or combinations thereof, independent of the operation of the adsorber vessel in regeneration (heating / cooling / idle), and (e) using sequencing valves at the inlet and outlet of the adsorber vessel in regeneration to direct of the first part of the stream comprising residual CO₂ as needed.

One or more embodiments relate to the above embodiments, in which the adsorption process contains at least three adsorber vessels, of which at least two are in different stages of regeneration, and comprises: (a) routing at least a first portion of the first part of the stream comprising residual CO₂ as regeneration gas to enter an adsorber vessel in regeneration to be cooled, collecting the spent regeneration gas, (b) heating the spent regeneration gas and the remaining portion of the first part of the stream comprising residual CO₂ to produce a heated regeneration gas, (c) routing at least part of the heated regeneration gas to an adsorber vessel in regeneration to be heated and collecting the spent heated regeneration gas and routing it with the remainder of the heated regeneration gas to the reforming or water gas shift sections or combinations thereof via dedicated passageways; and (d) utilizing sequencing valves at the inlets and outlets of the adsorber vessels in regeneration to be heated and cooled to direct the streams as needed.

One or more embodiments relate to the above embodiments, in which the stream comprising residual CO₂ is generated in a hydrogen manufacturing plant, wherein the hydrogen manufacturing plant comprises: (a) a syngas production unit, (b) a water gas shift unit, (c) a heat recovery section, (d) a H₂ purification section, (e) a compressor, (f) a temperature swing adsorption [TSA] dryer, (g) a cold box (multi-stream heat exchanger) with a refrigeration system, wherein the refrigeration system comprises: (1) a mixed refrigerant working fluid, comprising at least two components, and (2) a refrigerant loop with at least two different pressure levels, (h) a first phase separator generating the stream comprising residual CO₂ and a first condensate, (i) optionally an expansion valve configured to expand the first condensate from the first phase separator, and (j) at least one of a second phase separator, and a distillation column, and (k) a system to recover at least a portion of the stream comprising residual CO₂ and use that portion of the stream to regenerate the temperature swing adsorption dryer.

One or more embodiments relate to the above embodiments, in which the stream comprising residual CO₂ is generated in a hydrogen manufacturing plant, comprising: (a) a syngas production unit, (b) a water gas shift unit, (c) a heat recovery section, (d) a H₂ purification section, (e) a compressor, (f) a temperature swing adsorption [TSA] dryer, (g) a cold box (multi-stream heat exchanger) with a refrigeration system, wherein the refrigeration system comprises: (1) a mixed refrigerant working fluid, comprising at least two components, and (2) a refrigerant loop with at least two different pressure levels, (h) a first phase separator generating a first vapor and a first condensate, (i) optionally an expansion valve configured to expand the first condensate from the first phase separator, (j) at least one of a second phase separator, and a distillation column, (k) a CO₂ recovery system separating the first vapor into a stream enriched in at least one of H₂, Helium, CO, CH₄, N₂, Argon and containing residual CO₂, and a second stream depleted in at least one of H₂, Helium, CO, CH₄, N₂, Argon, and (I) a system to recover at least a portion of the stream enriched in at least one of H₂, Helium, CO, CH₄, N₂, Argon and containing residual CO₂, and use it to regenerate the temperature swing adsorption dryer.

One or more embodiments relate to the above embodiments, wherein the CO2 recovery system is a pressure swing adsorption system.

One or more embodiments relate to the above embodiments, wherein the distillation column is operated without an overhead condenser.

One or more embodiments relate to the above embodiments, wherein the syngas production unit comprises a reformer.

One or more embodiments relate to the above embodiments wherein the reformer comprises an SMR, an ATR, a POX, a heat-exchanger reformer installed in series, a heat-exchanger reformer installed in parallel, or any combination thereof.

One or more embodiments relate to the above embodiments, further comprising a heat exchanger after the compressor configured to chill a compressed feed stream.

One or more embodiments relate to the above embodiments, wherein the cold box is configured to cool a dried feed stream at least partially using an overhead vapor stream from the distillation column, the first phase separator, the second phase separator, or any combination of vapor streams thereof.

One or more embodiments relate to the above embodiments, wherein the wherein the multi-stream heat exchanger is configured to use a condensate from the second phase separator or a bottoms stream from the distillation column to chill the compressed feed stream.

One or more embodiments relate to the above embodiments, wherein the cold box and first phase separator are configured to at least partially condense CO₂ in a single stage.

One or more embodiments relate to the above embodiments, wherein the refrigeration system is configured to operate at three or more pressure levels.

One or more embodiments relate to the above embodiments, wherein the refrigeration package comprises a mixed refrigerant working fluid comprising CO₂.

### Brief Description of the Drawings

FIG. 1 illustrates a process flow diagram for a CO₂ removal process from a hydrogen manufacturing unit according to some embodiments of the disclosure.
FIG. 2 illustrates a process flow diagram for a CO₂ removal process from a hydrogen manufacturing unit according to some embodiments of the disclosure.
FIG. 3 illustrates a process flow diagram for a CO₂ removal process from a hydrogen manufacturing unit according to some embodiments of the disclosure.
FIG. 4 illustrates a process flow diagram for a CO₂ removal process from a hydrogen manufacturing unit according to some embodiments of the disclosure.
FIG. 5 illustrates a process flow diagram for a refrigeration circuit integrated with a CO₂ removal process from a hydrogen manufacturing unit according to some embodiments of the disclosure.
FIG. 6 illustrates a process flow diagram for a refrigeration circuit integrated with a CO₂ removal process from a hydrogen manufacturing unit according to some embodiments of the disclosure.
FIG. 7 illustrates a process flow diagram for a refrigeration circuit integrated with a CO₂ removal process from a hydrogen manufacturing unit according to some embodiments of the disclosure.
FIG. 8 illustrates a process flow diagram for a refrigeration circuit integrated with a CO₂ removal process from a hydrogen manufacturing unit according to some embodiments of the disclosure.
FIG. 9 illustrates a process flow diagram for the operation and regeneration of a temperature-swing adsorption dryer with a single adsorber in regeneration with successive heating and cooling steps (phases) according to some embodiments of the disclosure.
FIG. 10 illustrates a process flow diagram for the operation and regeneration of a temperature-swing adsorption dryer with multiple adsorber vessels in regeneration, allowing for parallel heating and cooling steps (phases) according to some embodiments of the disclosure.

### Detailed Description

The disclosure describes novel processes and/or systems for the removal of the CO₂ from a process gas of a hydrogen manufacturing unit containing, for example, CO₂, CO, H₂, light hydrocarbons, water, and/or inert gases using cryogenic technology. The disclosed processes and systems improve the energy efficiency of the cryogenic removal in comparison to existing technologies, with moderate to high CO₂ capture rates (e.g., 85 to 95 % of all carbon contained in the feed gas) and generation of high purity hydrogen (e.g., from 99.5 to 99.99 % purity) for any combination of reforming technologies (e.g., adiabatic pre-reforming, steam methane reforming, autothermal reforming, partial oxidation, recuperative reforming, heat-exchanger reforming, or any combination thereof) and hydrocarbon feedstock (natural gas, LPG, naphtha from fossil fuels, biogenic or other origin, or any mixtures thereof).

The disclosure describes cryogenic CO₂ capture processes and related refrigeration circuits coupled to hydrogen manufacturing processes. More specifically, the disclosure describes cryogenic CO₂ capture units, systems, and processes, in which the CO₂ is recovered after separation from lighter components through compression and partial condensation in a cryogenic separation section using external refrigerant as described in detail for various embodiments below. Existing processes focus either on different cryogenic CO₂ capture units (and refrigeration technologies), or on the overall integration in the hydrogen manufacturing unit and require complex additional CO₂ recovery downstream of the cryogenic unit.

The disclosure also describes full integration of recycle streams with the process for regeneration of the dryer adsorber vessels, maximizing process efficiencies compared with conventional regeneration processes.

Thus, in some embodiments, a syngas produced from a hydrogen production unit (e.g., using steam reforming) is treated in a purification section comprising a cryogenic section, such that the stream comprising CO₂, CO, H₂, light hydrocarbons, water, and/or inert gases can be separated into at least:
- a stream rich in hydrogen, containing more than 99.5 % (by volume/mole) of H₂
- a stream rich in CO₂, containing more than 99.5 % (by volume/mole) of CO₂
- an off-gas stream containing residual molecules, at least one or more of CO, CH₄, N₂, Ar, He, H₂, CO₂, or any combinations thereof.
The cryogenic separation section, dryer regeneration, and related operations are described in detail below.

### Hydrogen Manufacture

In some embodiments, hydrogen can be produced in a hydrogen manufacturing unit with a hydrocarbon feed stream. In some embodiments, the source of the hydrocarbon feed stream can be from fossil origin, such as natural gas, LPG, butane, naphtha, or any combinations thereof, for example. In some embodiments the source of the hydrocarbon feed stream can be from biogenic origin such as gaseous or liquid waste streams from hydroprocessing of vegetable oils, hydrogenated esters and fatty acids, or any combinations thereof, for example. In some embodiments, the source of the hydrocarbon feed stream can be generated from synthesis gas via Fischer-Tropsch or other reactions, including e-fuels and renewable fuels generated from methanation of CO₂ and renewable H₂, for example). In some embodiments, the source of the hydrocarbon feed stream can be from any of the above examples, including any and all combinations thereof.

In some embodiments, the hydrogen manufacturing unit or step can, with aid of steam and/or oxygen, convert the hydrocarbon feed into a syngas comprising H₂ and CO. In some embodiments, the system or process can include a water gas shift unit/step where the syngas is converted to hydrogen and CO₂ (shifted syngas). This system or process can, in some embodiments, also include a heat recovery section that can cool the shifted syngas and condense excess steam as a process condensate. In some embodiments, the cooled shifted syngas is directed to a purification section that can comprise a H₂ Pressure Swing Adsorption (PSA) unit. In some embodiments, the PSA unit can generate at least two product streams: a first product stream recovered at high pressure (e.g., close to the PSA feed inlet pressure) comprising most of the H₂ and substantially no CO₂ (e.g., only a small amount), and a CO₂-rich second product stream recovered at low pressure that comprises the remaining components (e.g., CO₂, and at least one of CO, CH₄, N₂, Ar, H₂, or H₂O).

### CO₂-Rich Stream (Second Product Stream)

As noted, in some embodiments, the CO₂-rich (second product) stream comprises CO₂, and at least one of CO, CH₄, N₂, Ar, H₂, H₂O, or any combinations thereof. In some embodiments, the CO₂-rich stream can comprise from 5 to 98 mole% CO₂. In some embodiments, the CO₂-rich stream can comprise from 0.1 mole% to 20 mole% CO. In some embodiments, the CO₂-rich stream can comprise from 0.1 mole% to 20 mole% CH₄. In some embodiments, the CO₂-rich stream can comprise from 0.1 mole% to 80 mole% N₂. In some embodiments, the CO₂-rich stream can comprise from 0 mole% to 30 mole% Ar. In some embodiments, the CO₂-rich stream can comprise from 0 mole% to 10 mole% He. In some embodiments, the CO₂-rich stream can comprise from 0 mole% to 60 mole% H₂. In some embodiments, the CO₂-rich stream can comprise from 0 mole% to 30 mole% H₂O.

In some embodiments where the CO₂-rich stream pressure is low, it can be compressed to high pressure. For example, the CO₂-rich stream can be compressed to a pressure above 20 bar (abs) (e.g., above 25 bar (abs), above 30 bar (abs), above 35 bar (abs), above 40 bar (abs), above 50 bar (abs), above 60 bar (abs), from 20 bar (abs) to 100 bar (abs), from 20 bar (abs) to 80 bar (abs), from 20 bar (abs) to 70 bar (abs), from 20 bar (abs) to 60 bar (abs), from 20 bar (abs) to 50 bar (abs), from 20 bar (abs) to 35 bar (abs), or from 35 bar (abs) to 60 bar (abs)). In some embodiments, the CO₂-rich stream is compressed until the CO₂ partial pressure is greater than 15 bar (abs) (e.g., greater than 16 bar (abs), greater than 17 bar (abs), greater than 18 bar (abs), greater than 19 bar (abs), greater than 20 bar (abs), from 15 bar (abs) to 20 bar (abs), or from 20 bar (abs) to 25 bar (abs)). In some embodiments, the compression can take place in a multistage compressor with intercooling. In some embodiments, the CO₂-rich stream is already at a high enough pressure and/or has a high enough CO₂ partial pressure that it is not compressed. In some embodiments, a higher partial pressure of CO₂, and therefore a higher total pressure is preferred.

### Drying

In some embodiments, the CO₂-rich stream can be dried in a dryer. In some embodiments, the dryer is a temperature swing adsorption-based (TSA) dryer. In some embodiments, the CO₂-rich stream to the dryer can be chilled against the cold streams available from the cold process described herein in a first heat exchanger. In some embodiments, the CO₂-rich stream to the drier can be chilled while maintaining a margin above the hydrate formation of the stream. Any remaining water that is not knocked out by the chilling heat exchanger can be removed by the dryer, for example.

In some embodiments, the dryer is a temperature swing adsorption dryer system that uses an adsorption process that is based on the adsorption of vapor phase water at low temperature (e.g., 10 °C to 50 °C) on a solid adsorbent selective for water. In some embodiments, the adsorbent can be a molecular sieve, zeolite, aluminosilicate, silica gel or activated carbon type of material, or any combinations thereof.

In some embodiments, the adsorbent can be regenerated by heating the adsorber vessel with a hot (e.g., 150 °C to 300 °C) regeneration gas to desorb the adsorbed moisture, followed by cooling the regenerated adsorber bed. In some embodiments, the regenerated adsorber vessel is cooled to the temperature at which the adsorption takes place. In some embodiments, the regenerated adsorber vessel is cooled with cold regeneration gas. In some embodiments, the regeneration gas is taken, at least in part, from the treated product stream from the adsorption step of the temperature swing adsorption process.

In some embodiments, at least a portion of the first low pressure (LP) flash gas, at least a portion of the second low pressure (LP) flash gas, at least a portion of the high pressure (HP) flash gas (all described below), or any combinations thereof, can be used as a cold regeneration gas for the cooling step of the temperature swing adsorption dryer, recovering heat from a hot adsorber bed.

In some embodiments, the drying can take place after the compression step. In other embodiments, the drying can take place prior to the compression step. In some other embodiments, the drying can take place between compression steps. Following the drying, in some embodiments the dried stream can be fed to a cold box.

### Cold-box (multi-stream heat exchanger)

In some embodiments, the dried stream is (further) cooled using evaporating refrigerant in one or more passes through a cold box. In some embodiments, the cold box is a multi-stream heat exchanger. In some embodiments, the refrigerant is a mix of two or more components. In some embodiments, the refrigerant is a mix of two components. The dried stream can be cooled to a temperature that allows partial condensation of the stream, for example, generating a liquid stream, CO₂-rich condensate. In some embodiments, because water has been removed by the dryer, the condensate will comprise primarily CO₂ (e.g., more than 50 mole% CO₂, more than 60 mole% CO₂, more than 70 mole% CO₂, more than 80 mole% CO₂, or more than 90 mole% CO₂,) and optionally containing some dissolved light gases (including CH₄, CO, N₂, H₂, Ar, He, O₂, or any combinations thereof).

### Phase Separation and Use of Flash Gas

In some embodiments, the CO₂-rich condensate can be separated from the vapor phase in a phase separator, producing a first CO₂-rich liquid, and a first CO₂-depleted flash gas (HP flash gas). In some embodiments, the first CO₂-depleted flash gas can be used to cool down the (warmer) feed to the cold box (e.g., a multi-stream heat exchanger) and then optionally at least a portion thereof can be recovered as a Warm HP Flash Gas product stream. In some embodiments, the first CO₂-depleted flash gas still comprises at least 5 mole% CO₂ (e.g., at least 7 mole% CO₂, at least 10 mole% CO₂, at least 15 mole% CO₂, or at least 20 mole% CO₂). In some embodiments, the first CO₂-depleted flash gas also comprises CO, CH₄, N₂, Ar, H₂, He, Ar, or any combinations thereof.

In some embodiments, at least a portion of the first CO₂-depleted flash gas (warm HP flash gas) is recycled back to the hydrogen manufacturing unit or step. The warm HP flash gas can be near ambient temperature, i.e. at a temperature of around 5 °C, or around 15 °C, or around 25 °C, or around 35 °C, or from 5 °C to 35 °C. This makes the warm HP flash gas a suitable candidate for cooling adsorbers at higher temperatures, such as in the range of 100 °C to 300 °C. In some of these cases, the first CO₂-depleted flash gas can undergo a reforming reaction, converting its residual CH₄ content into additional H₂ and CO by reforming with CO₂ and steam in a catalytic reactor or reformer. The reformer can be of the heat-exchanger and/or gas-heated reformer-type, for example. In other embodiments, the first CO₂-depleted flash gas can be combined with fresh hydrocarbon feed and fed to another reformer part of the same hydrogen manufacturing unit or step (e.g., a pre-reformer, a steam-methane reformer (SMR), autothermal reformer (ATR), or any combination thereof).

In some embodiments, at least a portion of the first CO₂-depleted flash gas (warm HP flash gas) is heated with heat from the hydrogen manufacturing unit (e.g., before or during reforming) to generate a hot HP flash gas. In some embodiments, the hot HP flash gas can be used to heat the dryer (e.g., temperature swing adsorption-based (TSA) dryer) during the heating step. This can facilitate the desorption of the adsorbed water from the TSA dryer adsorbent and allow recovery of the desorbed water for further steam reforming reactions when the water-loaded hot HP flash gas reaches the reforming section of the hydrogen manufacturing unit. After completion of the dryer heating step, in some embodiments, a remaining portion of the first CO₂-depleted flash gas (warm HP flash gas) can be used as a coolant (e.g., to return the TSA dryer bed back to ambient conditions to start a new drying phase, thereby recovering some of the heat that was delivered to the TSA dryer bed).

Heating at least a portion of the first CO₂-depleted flash gas (warm HP flash gas) with heat from the hydrogen manufacturing unit as described in the embodiments above can provide multiple advantages for the performance of the hydrogen manufacturing unit. Some of these advantages can include: (1) heat recovery from the hydrogen manufacturing unit to regenerate the dryer can eliminate the need for the installation of a stand-alone regeneration gas heater; (2) water recovery from the dryer bed in the heating step can reuse the water as a reactant in the reforming reactions; (3) water recovery from the dryer can also eliminate the need for a spent regeneration gas cooler and knock-out drum; (4) the residual water content from the spent regeneration gas is not recycled to the inlet of the dryer and the dryer size might therefore be reduced; (5) additional hydrogen generation from the recovered water and methane molecules.

Thus, in some embodiments, the recycle of the hot HP flash gas (or warm HP flash gas if not heated by the hydrogen manufacturing unit) to the reformer/reforming step can involve: (1) the hot HP flash gas recycle stream is mixed with the steam/hydrocarbon mixture and fed to a main reformer (SMR or ATR, or a combination thereof, either in series or in parallel); (2) the hot HP flash gas recycle stream is mixed with the steam/hydrocarbon mixture and fed to a pre-reformer; (3) the hot HP flash gas recycle stream is mixed with make-up steam and/or make-up hydrocarbons to the tube side inlet of a heat-exchanger reformer installed in parallel to the main reformer that receives its shell side heat input from the mixture of the main reformer outlet and the tube side outlet to generate a reformed gas that is sent to the water gas shift section of the hydrogen manufacturing unit; (4) the hot HP flash gas recycle stream is mixed with make-up steam and/or make-up hydrocarbons to the tube side inlet of a gas-heated reformer installed in series to the main reformer that receives its shell side heat input from the main reformer outlet, generating a partially reformed stream that is mixed with the feed hydrocarbon/steam mixture and fed to the main reformer from the tube side outlet, and a fully reformed stream from the shell side outlet is sent to the water gas shift section of the hydrogen manufacturing unit; and combinations thereof.

In some embodiments, at least a portion of the first CO₂-depleted flash gas is fed to an additional CO₂ recovery unit (e.g., a solvent absorption unit, a membrane, a PSA system, or any combinations thereof) where at least some of the remaining CO₂ is separated from the stream (e.g., the rest of the gases) and recycled to the compressor/compression stage. In some embodiments, the remaining stream/gases can be recovered and/or used as fuel.

In some embodiments, at least a portion of the first CO₂-depleted flash gas is recycled to the H₂ PSA unit.

In some embodiments, at least a portion of the first CO₂-depleted flash gas is recycled to the compressor/compression stage (e.g., at least 10 mole%, at least 20 mole%, at least 30 mole%, at least 40 mole%, at least 50 mole%, at least 60 mole%, at least 70 mole%, at least 80 mole%, at least 90 mole%, or 100 mole% recycled to the compression stage).

In some embodiments, the CO₂-rich condensate separated from the first CO₂-depleted flash gas has sufficient purity and can be used as a product stream. However, in most embodiments, the CO₂-rich condensate is subjected to a further cryogenic purification. Also, in some embodiments, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich condensate (or collection of multiple condensates, in embodiments that involve multiple cycles of cooling-condensing-separation) is optionally reheated in a heat exchanger (e.g., the first heat exchanger or the cold box). In some embodiments, the optionally reheated separated CO₂-rich condensate(s) can then be expanded to a lower pressure, which allows further cooling (e.g., cooling to temperature above - 56 °C, (a temperature below which there is a risk of CO₂ freezing)). The cooled CO₂-rich stream can, in some embodiments, be partially evaporated (e.g., in an evaporator) and separated (e.g., in a phase separator) into at least one vapor phase and at least one liquid phase. In some embodiments, the generated vapor phase (first LP flash gas) is separated from the liquid phase (second CO₂-rich condensate) in a second phase separator without additional hot or cold energy supplied. However, in some embodiments, additional hot or cold energy can be used. The second CO₂-rich condensate is recovered as CO₂ product. In some embodiments the second CO₂-rich condensate is recovered as CO₂ product without any refrigeration recovered from the condensate. Optionally, this CO₂ product can be pumped as liquid to a desired export pressure. In some embodiments, after or without pumping, this CO₂ product can be heated to partially cool down the dried gas stream, while remaining in liquid phase. In some embodiments, this CO₂ product can (also) be used to cool down the feed to the Temperature Swing Adsorption Dryer unit.

### Cryogenic Distillation

In some embodiments where the purity of the second CO₂-rich condensate is insufficient, the second CO₂-rich condensate can be directed to a distillation column. In the distillation, the bottom is heated and at least partially vaporized in a reboiler, generating vapor circulation, for example. In some embodiments, no condenser for the partial (or full) condensation of the vapor product is utilized. Without a condenser, the entire cold overhead stream (second LP flash gas) from the column can, in some cases, be used as refrigerant for the incoming feed gas instead of (or in addition to) requiring refrigeration duty. However, some embodiments use a condenser for partial or full condensation of the vapor product. In some embodiments, the reboiler duty is supplied by the warm feed gas and can be integrated within the aforementioned cold box (multi-stream heat exchanger). In some embodiments, the liquid column product can either be extracted as final CO₂ product or in some other embodiments can be pumped and exported, or pumped, heated, and then exported as a liquid product.

In some embodiments, at least a portion of the first LP flash gas, at least a portion of the second LP flash gas, or any combination of at least a portion of both, can be used to cool down the warm dried gas feed. In some embodiments, at least a portion of the first LP flash gas, at least a portion of the second LP flash gas, or any combination of at least a portion of both can be fully or partially recycled to the feed and/or an interstage of the multistage compressor after heating.

In some embodiments, at least a portion of the first LP flash gas, at least a portion of the second LP flash gas, or any combination of at least a portion of both, can be used as regeneration gas for the Temperature Swing Adsorption Dryer.

### Recovery of Light Gases

The HP flash gas and LP flash gas (e.g., first LP flash gas, second LP flash gas, third LP flash gas, etc) streams generated by different embodiments can be treated in different ways. For example, in some embodiments requiring only a moderate CO₂ product purity, the bottom purification step can be omitted. However, if downstream operations require an improved CO₂ purity, the bottom purification section can be included. For systems requiring a moderate CO₂ capture rate (e.g., 60 to 90 % of incoming CO₂ or 80 to 85 % of incoming CO₂,), the HP flash gas can be sent to the battery limit and used as fuel, for example. In embodiments where a higher CO₂ capture rate is required by downstream operations (e.g., above 80 % of incoming CO₂, above 85 % of incoming CO₂, above 90 % of incoming CO₂, above 95 % of incoming CO₂, above 98 % of incoming CO₂, from 85 % to 99.99 % of incoming CO₂), the LP flash gas recycle and/or the HP flash gas recycle options can optionally be implemented, increasing the overall CO₂ capture rate (e.g., to above 80 % of incoming CO₂, above 85 % of incoming CO₂, above 90 % of incoming CO₂, above 95 % of incoming CO₂, above 98 % of incoming CO₂, from 90 % to 93 % of incoming CO₂, or from 85 % to 99.5 % of incoming CO₂), by the addition of the recycle compression equipment. Further extension with additional purification and/or recovery units on the HP flash gas and/or LP flash gas streams can be considered when even higher CO₂ capture rates (e.g., above 90 % of incoming CO₂, above 93 % of incoming CO₂, above 95 % of incoming CO₂, above 97 % of incoming CO₂, above 98 % of incoming CO₂, from 93.% to 99.5 % of incoming CO₂, or from 95 % to 99.9 % of incoming CO₂), are desired in certain embodiments. Thus, the disclosed system can be modularly constructed and expanded as desired CO₂ capture requirements change and evolve over time.

### CO₂ Removal Systems and Process Examples

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure. In all of the following, a same reference designates a stream flowing in a conduit and the conduit which conveys this stream.

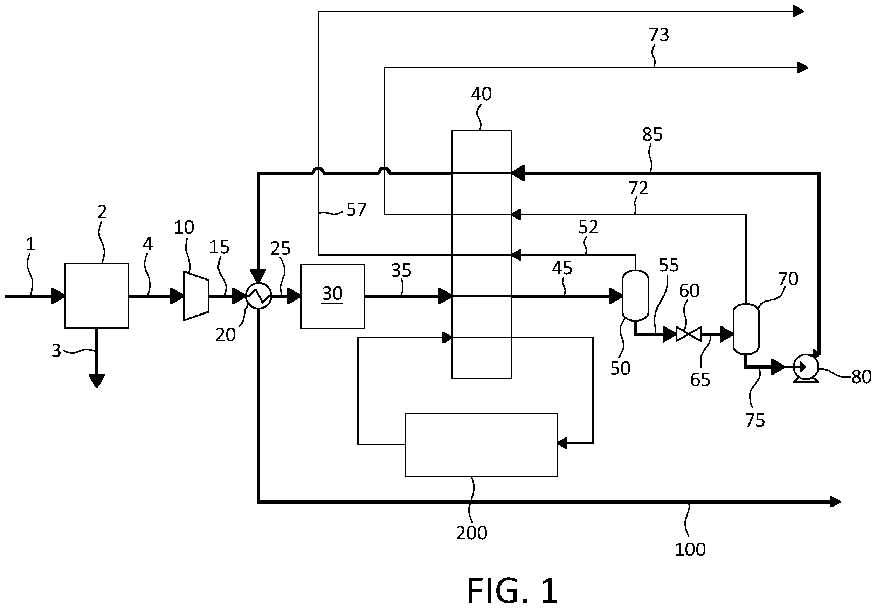

FIG. 1 illustrates some embodiments of the disclosure. In FIG. 1, a shifted syngas stream 1 from a hydrogen manufacturing unit or step is directed to a H₂ Pressure Swing Adsorption (PSA) unit 2. As shown in FIG. 1, the PSA unit 2 can generate at least two product streams: a first product stream 3 recovered at high pressure (e.g., close to the PSA feed inlet pressure) comprising most of the H₂ and substantially no CO₂ (e.g., only a small amount), and a CO₂-rich second product stream 4 recovered at low pressure that comprises the remaining components (e.g., CO₂, and at least one of CO, CH₄, N₂, Ar, H₂, or H₂O).

The CO₂-rich second product stream 4 is compressed to higher pressure in at least one compressor 10 to produce a compressed feed stream 15. In some embodiments, the compression can take place in a multistage compressor with intercooling.

The compressed feed stream 15 can be chilled in a first heat exchanger 20 (e.g., chilled by cold streams available from the cold process described below) to produce chilled compressed feed stream 25. The chilled compressed feed stream 25 can be dried in a dryer 30 (e.g., a temperature swing adsorption dryer) to produce a dried feed stream 35. As such, residual water in the feed stream 4 that is not liquified in the compression process or the first heat exchanger 20 (and removed by a knock-out drum upstream of the dryer (not shown in FIG. 1)) can be removed by the dryer 30, for example.

Following the drying, in some embodiments the dried stream 35 can be fed to a cold box (multi-stream heat exchanger) 40. The dried stream 35 is at least partially cooled using a refrigeration package 200 in one or more passes through the cold box 40 to produce a partially condensed mixed phase stream 45, with the condensate enriched in CO₂. In some embodiments, because water has been removed by the dryer, the condensate will comprise primarily CO₂ (e.g., more than 50 mole% CO₂, more than 60 mole% CO₂, more than 70 mole% CO₂, more than 80 mole% CO₂, or more than 90 mole% CO₂,) and optionally containing some dissolved light gases (including CH₄, CO, N₂, Ar, He, O₂, and combinations thereof).

In some embodiments, the CO₂-rich condensate of the partially condensed stream 45 can be separated from the vapor phase in a phase separator 50, producing a first CO₂-rich liquid 55, and a first CO₂-depleted flash gas 52 (HP flash gas). In some embodiments, the first CO₂-depleted flash gas 52 can be used to at least partially cool down the (warmer) dried stream feed 35 to the cold box 40 and then optionally recovered as a warm HP Flash Gas product stream 57.

In some embodiments not shown in FIG. 1, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 (e.g., a valve) to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then optionally recovered as a product stream 73. Optionally, the liquid phase 75 (second CO₂-rich condensate) can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 1, after or without pumping, the CO₂ stream 85 can be heated to partially cool down the dried gas stream 35, while remaining in liquid phase. In some embodiments also not shown in FIG. 1, the second CO₂-rich condensate 75 (or 85) is recovered as CO₂ product without any refrigeration recovered from the condensate.

In some embodiments not shown in FIG. 1, at least a portion of the first LP flash gas and/or at least a portion of the HP flash gas, can be used as a cold regeneration gas for a cooling step of the regeneration of the temperature swing adsorption dryer, recovering heat from a hot adsorber bed.

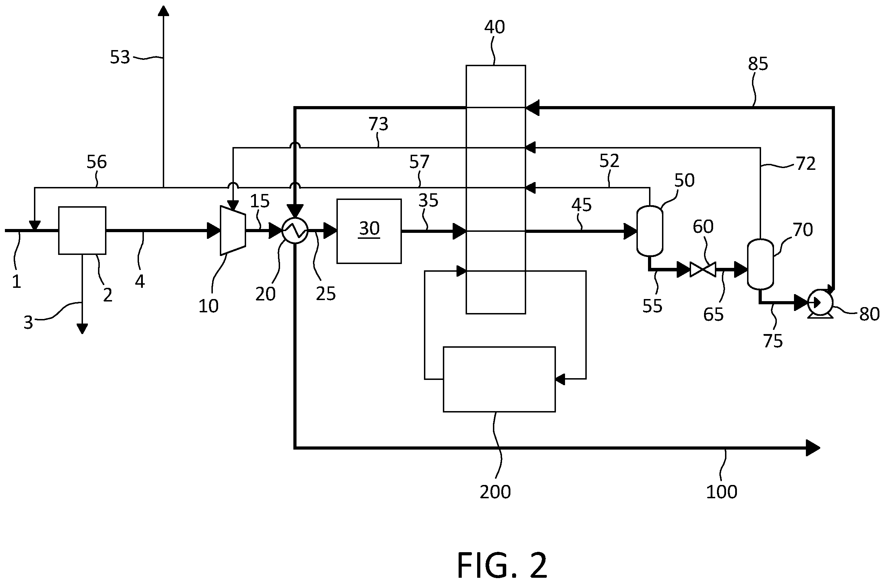

FIG. 2 illustrates some additional embodiments of the disclosure that include recycle options. In FIG. 2, a shifted syngas stream 1 from a hydrogen manufacturing unit or step is again directed to a H₂ Pressure Swing Adsorption (PSA) unit 2 to generate at least two product streams: a first product stream 3 recovered at high pressure (e.g., close to the PSA feed inlet pressure) comprising most of the H₂ and substantially no CO₂ (e.g., only a small amount), and a CO₂-rich second product stream 4 recovered at low pressure that comprises the remaining components (e.g., CO₂, and at least one of CO, CH₄, N₂, Ar, H₂, or H₂O).

The CO₂-rich second product stream 4 is compressed to higher pressure in at least one compressor 10 (e.g., a single compressor or a multistage compressor with intercooling) to produce a compressed feed stream 15.

The compressed feed stream 15 can be chilled in a first heat exchanger 20 (e.g., chilled by cold streams available from the cold process described below) to produce chilled compressed feed stream 25. The chilled compressed feed stream 25 can be dried in a dryer 30 (e.g., a temperature swing adsorption dryer) to produce a dried feed stream 35. As such, residual water in the feed stream 4 that is not liquified in the compression process or the first heat exchanger 20 can be removed by the dryer 30, for example.

Following the drying, the dried stream 35 can be fed to a cold box (e.g., a multi-stream heat exchanger) 40. The dried stream 35 is at least partially cooled using a refrigeration package 200 in one or more passes through the cold box 40 to produce a partially condensed mixed phase stream 45, with the condensate enriched in CO₂.

In some embodiments, the CO₂-rich condensate of the partially condensed stream 45 can be separated from the vapor phase in a phase separator 50, producing a first CO₂-rich liquid 55, and a first CO₂-depleted flash gas 52 (HP flash gas). In some embodiments, the first CO₂-depleted flash gas 52 (HP flash gas) can be used to at least partially cool down the (warmer) dried stream feed 35 to the cold box 40 to form a warmed first CO₂-depleted HP flash gas 57 stream. As shown in FIG. 2, this warmed first CO₂-depleted HP flash gas 57 stream can be at least partially (e.g., at least 10 %, at least 20 %, at least 30 %, at least 40 %, at least 50 %, at least 60 %, at least 70 %, at least 80 %, at least 90 %, or at least 95 %) recycled back to the hydrogen manufacturing unit or step as warm HP flash gas stream 53 or used as fuel, with the remainder of the warm HP flash gas stream 56 recycled to an inlet of the PSA unit 1.

In some embodiments not shown in FIG. 2, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then at least partially recycled as a warmed stream 73 back to the compressor 10. Optionally, the liquid phase 75 (second CO₂-rich condensate) can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 2, after or without pumping, the CO₂ stream 85 can be heated to partially cool down the dried gas stream 35, while remaining in liquid phase. In some embodiments also not shown in FIG. 2, the second CO₂-rich condensate 75 (or 85) is recovered as CO₂ product without any refrigeration recovered from the condensate.

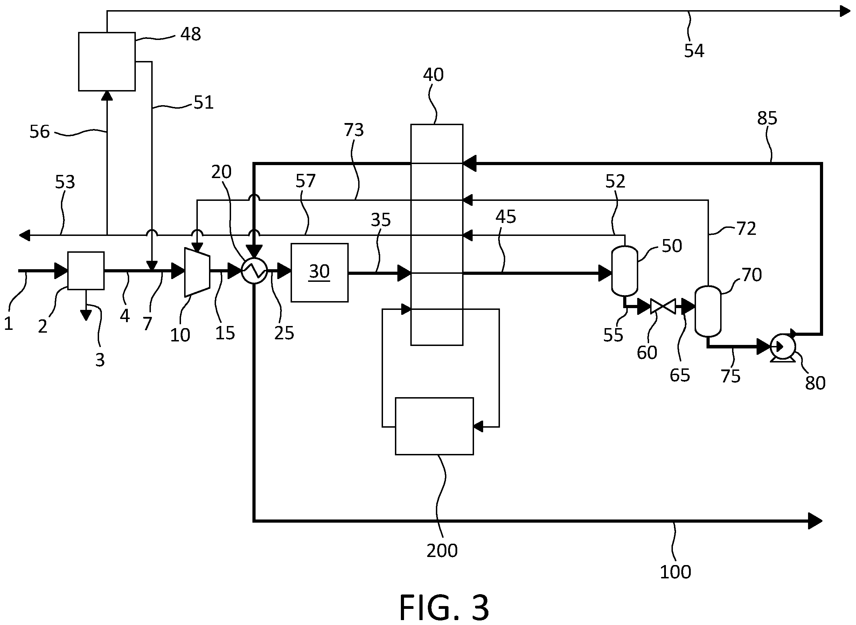

FIG. 3 illustrates some additional embodiments of a disclosure that includes a recycle option with additional CO₂ recovery from the flash gas. In comparison to the process described in FIG. 2, at least a portion (56) of the remainder of the warmed first CO₂-depleted flash gas 57 can be fed to an additional CO₂ recovery unit 48 (e.g., a solvent absorption unit, a membrane, a PSA system, or any combinations thereof) where at least some of the remaining CO₂ is separated from the stream (e.g., the rest of the gases) and recycled as recycle stream 51 to the feed to the compressor/compression stage 4 (CO₂-rich second product stream) to form combined feed stream 7 to the compressor 10. In some embodiments, the remaining stream/gases 54 can be recovered and/or used as fuel.

In some embodiments not shown in FIG. 3, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then at least partially recycled as a warmed stream 73 back to the compressor 10. Optionally, the liquid phase 75 (second CO₂-rich condensate) can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 3, after or without pumping, the CO₂ stream 85 can be heated to partially cool down the dried gas stream 35, while remaining in liquid phase. In some embodiments also not shown in FIG. 3, the second CO₂-rich condensate 75 (or 85) is recovered as CO₂ product without any refrigeration recovered from the condensate.

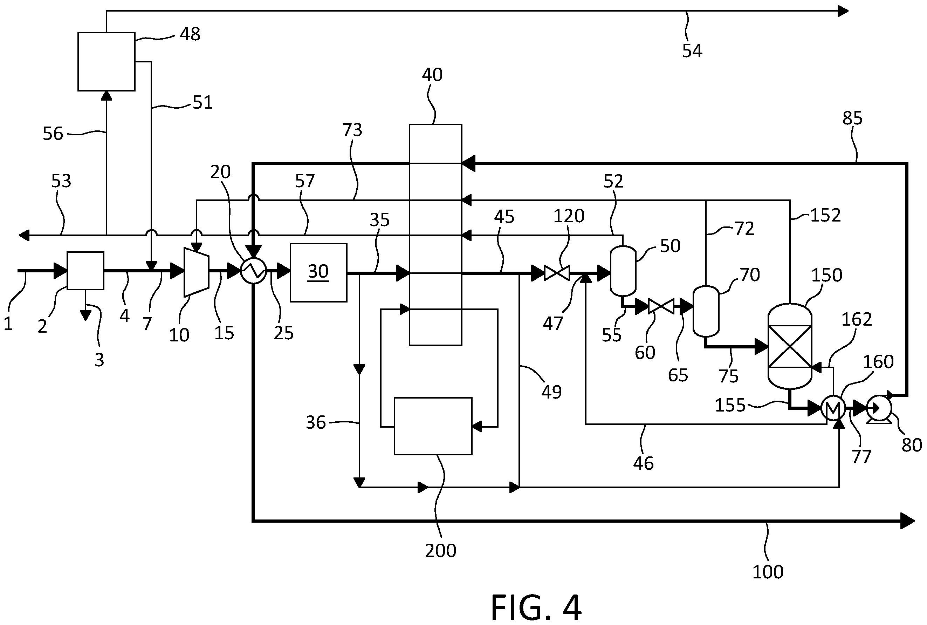

FIG. 4 illustrates some additional embodiments of the disclosure that include recycle options and additional bottom purification. In FIG. 4, a shifted syngas stream 1 from a hydrogen manufacturing unit or step is again directed to a H₂ Pressure Swing Adsorption (PSA) unit 2 to generate at least two product streams: a first product stream 3 recovered at high pressure (e.g., close to the PSA feed inlet pressure) comprising most of the H₂ and substantially no CO₂ (e.g., only a small amount), and a CO₂-rich second product stream 4 recovered at low pressure that comprises the remaining components (e.g., CO₂, and at least one of CO, CH₄, N₂, Ar, H₂, or H₂O).

The CO₂-rich second product stream 4 is compressed to higher pressure in at least one compressor 10 (e.g., a single compressor or a multistage compressor with intercooling) to produce a compressed feed stream 15.

The compressed feed stream 15 can be chilled in a first heat exchanger 20 (e.g., chilled by cold streams available from the cold process described below) to produce chilled compressed feed stream 25. The chilled compressed feed stream 25 can be dried in a dryer 30 (e.g., a temperature swing adsorption dryer) to produce a dried feed stream 35. As such, residual water in the feed stream 4 that is not liquified in the compressor 10 or the first heat exchanger 20 can be removed by the dryer 30, for example.

Following the drying, the dried stream 35 can be fed to a cold box (e.g., a multi-stream heat exchanger) 40. The dried stream 35 is at least partially cooled using a refrigeration package 200 in one or more passes through the cold box 40 to produce a partially condensed mixed phase stream 45, with the condensate enriched in CO₂.

In some embodiments, the partially condensed mixed phase stream 45 can be expanded to a lower pressure with expansion device 120 to produce a lower pressure mixed phase stream 47. The CO₂-rich condensate of the mixed phase stream 47 can be separated from the vapor phase in a phase separator 50, producing a first CO₂-rich liquid 55, and a first CO₂-depleted flash gas 52 (HP flash gas). In some embodiments, the first CO₂-depleted flash gas 52 (HP flash gas) can be used to at least partially cool down the (warmer) dried stream feed 35 to the cold box 40 to form a warmed first CO₂-depleted flash gas 57 (HP flash gas) stream. As shown in FIG. 4, this warmed first CO₂-depleted flash gas 57 (HP flash gas) stream can be at least partially (53) (e.g., at least 10 %, at least 20 %, at least 30 %, at least 40 %, at least 50 %, at least 60 %, at least 70 %, at least 80 %, at least 90 %, or 100 %) recycled back to the hydrogen manufacturing unit or step. In addition, at least a portion (56) of the remainder of the warmed first CO₂-depleted flash gas 57 can be fed to an additional CO₂ recovery unit 48 (e.g., a solvent absorption unit, a membrane, a PSA system, or any combinations thereof) where at least some of the remaining CO₂ is separated from the stream (e.g., the rest of the gases) and recycled as recycle stream 51 to the feed to the compressor/compression stage 4 (CO₂-rich second product stream) to form combined feed stream 7 to the compressor 10. In some embodiments, the remaining stream/gases 54 can be recovered and/or used as fuel.

In some embodiments not shown in FIG. 4, the above-described stages of cooling, condensing, and separating can be repeated (e.g., repeated one time, repeated two times, or repeated three times) to produce a further enriched CO₂-rich condensate (e.g., from multiple CO₂-rich condensates).

In some embodiments, the separated CO₂-rich liquid condensate 55 (or collection of multiple condensates, in embodiments (not shown) that involve multiple cycles of cooling-condensing-separation) is optionally reheated in a heat exchanger (not shown), and expanded to a lower pressure with expansion device 60 to produce a lower pressure CO₂-rich liquid condensate 65, which can be further cooled in some embodiments (not shown). The lower pressure CO₂-rich liquid condensate 65 can be partially evaporated and separated in a second phase separator 70 into at least one vapor phase 72 and at least one liquid phase 75. In some embodiments, the generated vapor phase 72 (first LP flash gas) is separated from the liquid phase 75 (second CO₂-rich condensate) in the second phase separator 70 without additional hot or cold energy supplied. The generated vapor phase 72 (first LP flash gas) can (also) be used to at least partially cool down the (warmer) dried stream feed 35 to the cold box 40 and then at least partially recycled as a warmed stream 73 back to the compressor 10.

As shown in FIG. 4, the liquid phase 75 (second CO₂-rich condensate) can be directed to a distillation column 150 for further purification. In the distillation column 150, the bottoms is heated and at least partially vaporized in a reboiler 160, generating vapor recirculation stream 162, for example. The overhead stream 152 (second LP flash gas) from the distillation column 150 and the generated vapor phase 72 (first LP flash gas) from the second phase separator 70 can, either separately or combined, be used to at least partially cool down the (warmer) dried stream feed 35 to the cold box 40 and then at least partially recycled as a warmed stream 73 back to the compressor 10. In some embodiments, no condenser for the partial (or full) condensation of the vapor product is utilized in the column 150. In some embodiments not shown in FIG. 4, without a condenser, the entire overhead stream 152 (second LP flash gas) from the column 150 can, in some cases, be used as refrigerant for the incoming feed gas instead of (or in addition to) requiring refrigeration duty. However, some embodiments also not shown in FIG. 4 use a condenser with the column for partial or full condensation of the vapor product. In some embodiments, the reboiler 160 duty can be at least partially supplied by integration with the cold box 40 and related streams. Thus, as shown in FIG. 4, at least a portion 49 of the partially condensed mixed phase stream 45 from the cold box 40 can be used to provide at least some of the reboiler 160 duty and then returned as cooled stream 46 bypassing expansion device 120 and be fed to the first phase separator 50. In some embodiments at least a portion 36 of the (warmer) dried stream feed 35 can (also or instead) be used to provide at least some of the reboiler duty, bypassing the cold box as shown in FIG. 4. In some embodiments, the liquid column product 77 can be pumped in at least one pump 80 as liquid to a desired CO₂ product pressure. The pumped CO₂ product 85 can be used to cool down the compressed feed stream 15 before the temperature swing adsorption dryer unit 30 in the first heat exchanger 20 and then recovered as CO₂ product stream 100. In some embodiments not shown in FIG. 4, after or without pumping, the CO₂ stream 85 can be heated to partially cool down the dried gas stream 35, while remaining in liquid phase. In some embodiments also not shown in FIG. 4, the second CO₂-rich condensate 75 (or 85) is recovered as CO₂ product without any refrigeration recovered from the condensate.

The described processes and systems can be used in any field where there is a need for CO₂ removal from a process stream. The disclosure aims to reduce the carbon footprint, and potentially increase the efficiency, of CO₂ removal and/or capture. Some of the benefits of the invention can include a reduction of carbon dioxide emissions, for example from 5 to 99 % (e.g., 80 % to 98 % or from 85 % to 95 %) reduction of all carbon contained in a stream (feed gas). In addition, the described processes and systems can achieve improved efficiencies, such as the use of significantly less external refrigerant and less unit operations and equipment. The described processes and systems can also be modular and have a phased implementation, delivering an advantage for retrofitting existing systems and plants, tailoring the required investment to the targeted CO₂ capture rate while still allowing room for future improvement.

### Integrated Refrigeration Systems and Processes

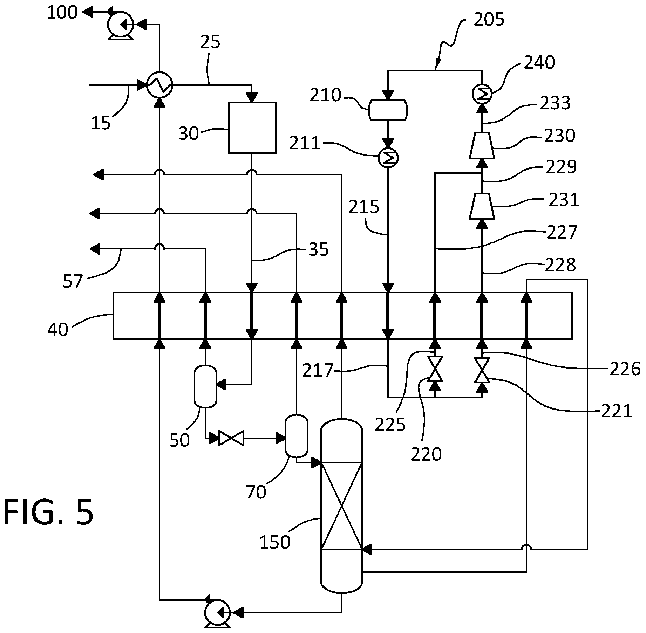

FIG. 5 illustrates some additional embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. The condensed refrigerant stream 215 can be further subcooled in the cold box 40 to produce a subcooled condensed refrigerant stream 217. A first portion of the subcooled condensed refrigerant stream 217 can be expanded to a first low pressure with expansion device 220 to produce a mixed phase stream 225 having a sharp temperature decrease to below the (partial) condensation temperature of the warm dried feed gas 35. At least one additional portion of the subcooled condensed refrigerant stream 217 can be expanded to a second low pressure (e.g., lower than the first low pressure) with expansion device 221 to produce a mixed phase stream 226 at a temperature below the (partial) condensation temperature of the warm dried feed gas 35. In some embodiments not shown in FIG. 5, other portions of the subcooled condensed refrigerant stream 217 can be expanded to different lower pressures (ranging from the lowest pressure to the highest pressure) using expansion devices to produce mixed phase streams at temperatures below the (partial) condensation temperature of the warm dried feed gas 35. In some embodiments, at least one portion of the subcooled condensed refrigerant stream 217 can be expanded to a low pressure to produce a mixed phase stream at a temperature below the (partial) condensation temperature of the warm dried feed gas 35 and is used for cooling, while the other portions of the subcooled condensed refrigerant stream 217 do not (necessarily) achieve a temperature below the (partial) condensation temperature of the warm dried feed gas 35. The mixed phase streams 225 and 226 can then be fully evaporated against the warm dried feed gas 35 at low pressure in the cold box 40 to produce evaporated streams 227 and 228, respectively. The evaporated stream 228 is then compressed to higher pressure in a compressor (stage) 231 to produce a compressed stream 229 that can be combined with higher pressure evaporated stream 227 with the combined stream compressed in a second compressor (stage) 230 to produce a further compressed stream 233 which can, in some embodiments, be the high pressure of the system. In the embodiments not shown in FIG. 5 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Streams 57 and 100 exiting and stream 15 entering the system of FIG. 5 can be understood as streams with the same numbers in other embodiments .

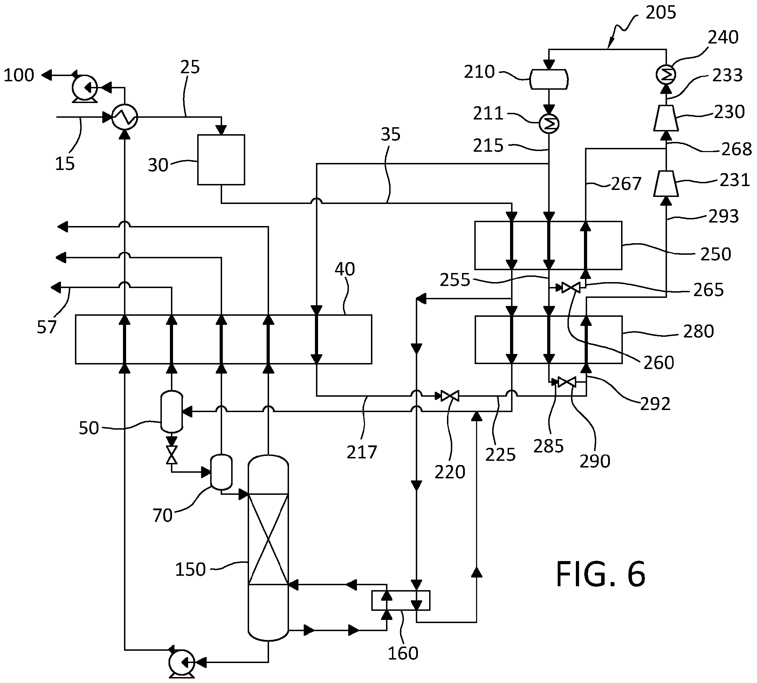

FIG. 6 illustrates some additional embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. A first portion of the condensed refrigerant stream 215 can be further subcooled by cold vapor gases (HP flash gas and/or LP flash gas) from the cold box 40 (first multi-stream heat exchanger) to produce a first subcooled condensed refrigerant stream 217. A second portion of the condensed refrigerant stream 215 is subcooled in a second multi-stream heat exchanger 250 against evaporating refrigerant to produce a second subcooled condensed refrigerant stream 255. A third portion of the condensed refrigerant stream 215, which is shown as part of the second portion, is even further subcooled in a third multi-stream heat exchanger 280 against evaporating refrigerant to form a third subcooled condensed refrigerant stream 285. Warm dried feed gas 35 is cooled (and optionally partially condensed) in the second multi-stream heat exchanger 250 and third multi-stream heat exchanger 280 sequentially. The first subcooled condensed refrigerant stream 217 is expanded to a first low pressure by expansion device 220 to produce a mixed phase stream 225 having a sharp temperature decrease to below the (partial) condensation temperature of the warm dried feed gas 35. The third subcooled condensed refrigerant stream 285 is expanded by expansion device 290 to the same first low pressure as mixed phase stream 225 and then combined with mixed phase stream 225 to produce a combined stream 292. The combined stream 292 is fully evaporated against the dried feed gas 35 in the third multi-stream heat exchanger 280 to produce a combined evaporated stream 293. The second subcooled condensed refrigerant stream 255 is expanded to a second low pressure (e.g. lower than the first low pressure) by expansion device 260 to produce a second mixed phase stream 265 having a sharp temperature decrease to below the (partial) condensation temperature of the warm dried feed gas 35. In some embodiments, at least one portion of the subcooled condensed refrigerant stream 255 can be expanded to a low pressure to produce a mixed phase stream at a temperature below the (partial) condensation temperature of the warm dried feed gas 35 and is used for cooling, while the other portions of the subcooled condensed refrigerant stream do not (necessarily) achieve a temperature below the (partial) condensation temperature of the warm dried feed gas 35. The second mixed phase stream 265 is fully evaporated against the dried feed gas 35 in the second multi-stream heat exchanger 250 to produce an evaporated stream 267. The combined evaporated stream 293 is compressed in a first compressor (stage) 231 to the second low pressure and mixed with the evaporated stream 267 to form a recombined stream 268. The recombined stream 268 is compressed by a second compressor (stage) 230 to produce a further compressed stream 233 which can, in some embodiments, be at the high pressure of the system. In embodiments not shown in FIG. 6 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Additionally, where a distillation column 150 is used in the disclosed process, the column reboiler 160 can be integrated with the feed to the third multi-stream heat exchanger 280, bypassing the third multi-stream heat exchanger 280 as shown in FIG. 6, the cold box 40, the second multi-stream heat exchanger 250, the third multi-stream heat exchanger 280, or any combinations thereof, for example. Streams 57 and 100 exiting and stream 15 entering the system of FIG. 6 can be understood as the same streams in other embodiments.

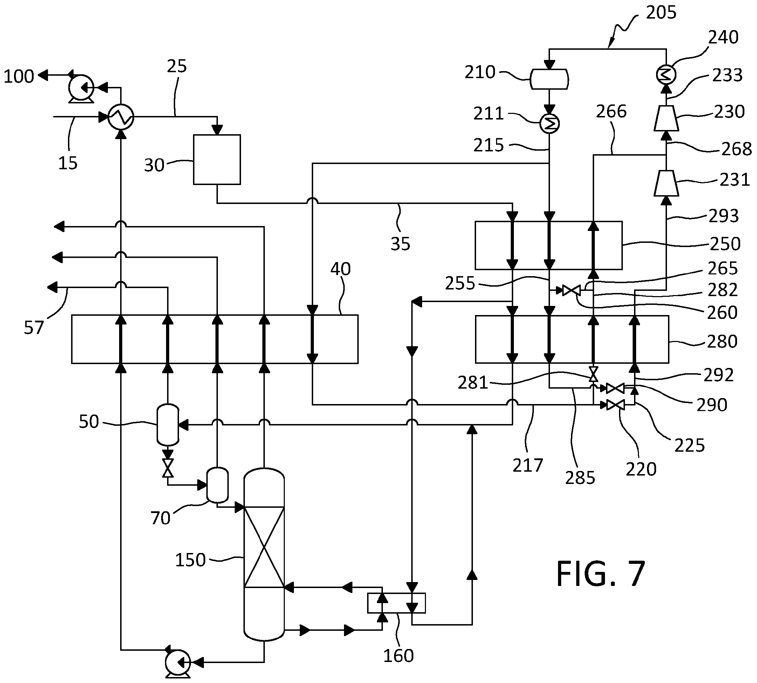

FIG. 7 illustrates some additional embodiments of the refrigeration circuit 200 of the disclosure. Mixed refrigerant 205 is fed to condenser 210 with heat exchanger 211 and condensed at a high pressure to produce a condensed refrigerant stream 215. In some embodiments, the condenser 210 can be air-cooled or water-cooled. A first portion of the condensed refrigerant stream 215 can be further subcooled by cold vapor gases (HP flash gas and/or LP flash gas) from the cold box 40 (first multi-stream heat exchanger) to produce a first subcooled condensed refrigerant stream 217. A second portion of the condensed refrigerant stream 215 is subcooled in a second multi-stream heat exchanger 250 against evaporating refrigerant to produce a second subcooled condensed refrigerant stream 255. A third portion of the condensed refrigerant stream 215, which is shown as part of the second subcooled condensed refrigerant stream 255, is even further subcooled in a third multi-stream heat exchanger 280 against evaporating refrigerant to form a third subcooled condensed refrigerant stream 285. Warm dried feed gas 35 is cooled (and optionally partially condensed) in the second multi-stream heat exchanger 250 and third multi-stream heat exchanger 280 sequentially.

A portion of first subcooled condensed refrigerant stream 217 is expanded to a first low pressure by expansion device 220 to produce a mixed phase stream 225 having a sharp temperature decrease to below the (partial) condensation temperature of the warm dried feed gas 35. The third subcooled condensed refrigerant stream 285 is expanded by expansion device 290 to the same first low pressure as mixed phase stream 225 and then combined with mixed phase stream 225 to produce a combined stream 292.

The remaining portion of first subcooled condensed refrigerant stream 217 is expanded to a second low pressure level (e.g. lower than the first low pressure) by expansion device 281 and heated in the third multi-stream heat exchanger 280 to produce a heated first refrigerant stream 282. The second subcooled condensed refrigerant stream 255 (that is not sent to the third multi-stream heat exchanger) is expanded to the second low pressure by expansion device 260 to produce a second mixed phase stream 265 having a sharp temperature decrease to below the (partial) condensation temperature of the warm dried feed gas 35. In some embodiments, at least one portion of the subcooled condensed refrigerant stream can be expanded to a low pressure to produce a mixed phase stream at a temperature below the (partial) condensation temperature of the warm dried feed gas 35 and is used for cooling, while the other portions of the subcooled condensed refrigerant stream do not (necessarily) achieve a temperature below the (partial) condensation temperature of the warm dried feed gas 35. The heated first refrigerant stream 282 and the second mixed phase stream 265 are combined and fully evaporated against the dried feed gas 35 in the second multi-stream heat exchanger 250 to produce an evaporated stream 266.

The combined stream 292 is fully evaporated against the dried feed gas 35 in the third multi-stream heat exchanger 280 to produce a combined evaporated stream 293. The combined evaporated stream 293 is compressed in a first compressor (stage) 231 to the second low pressure and mixed with the evaporated stream 266 to form a recombined stream 268. The recombined stream 268 is compressed by a second compressor (stage) 230 to produce a further compressed stream 233 which can, in some embodiments, be at the high pressure of the system. In embodiments not shown in FIG. 7 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Additionally, where a distillation column 150 is used in the disclosed process, the column reboiler 160 can be integrated with the feed to the third multi-stream heat exchanger 280, bypassing the third multi-stream heat exchanger 280 as shown in FIG. 7, the cold box 40, the second multi-stream heat exchanger 250, the third multi-stream heat exchanger 280, or any combinations thereof, for example. Streams 57 and 100 exiting and stream 15 entering the system of FIG. 7 can be interpreted as the streams with the same numbers in other embodiments.

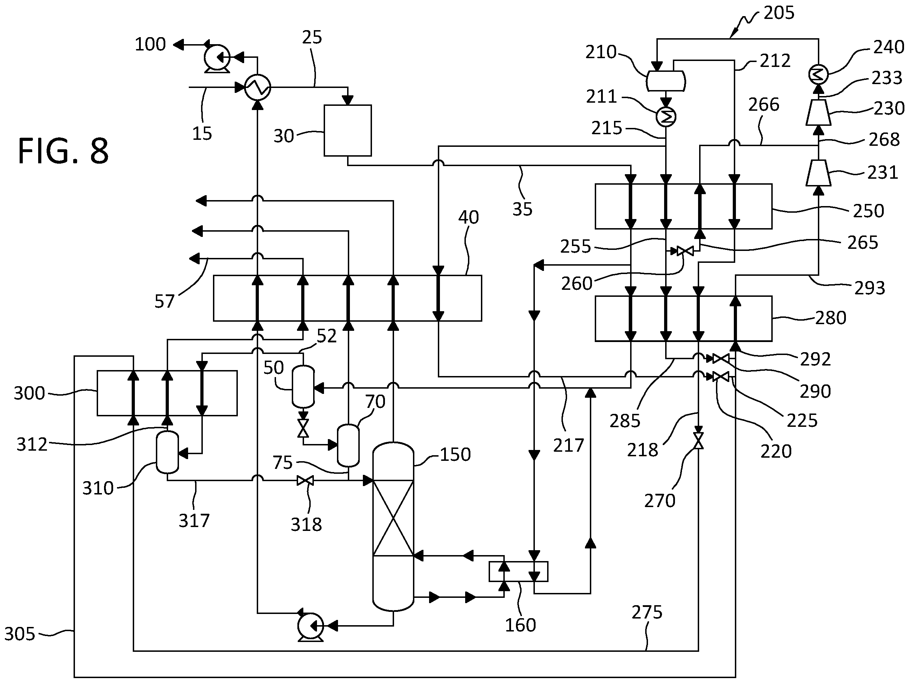

FIG. 8 illustrates some additional embodiments of the refrigeration circuit 200 of the disclosure. Mixed refrigerant 205 is fed to condenser 210 with heat exchanger 211 and partially condensed at a high pressure to produce a first condensed refrigerant stream 215 and a non-condensed refrigerant stream 212. In some embodiments, the condenser 210 can be air-cooled or water-cooled. A first portion of the condensed refrigerant stream 215 can be further subcooled by cold vapor gases (HP flash gas and/or LP flash gas) from the cold box 40 (first multi-stream heat exchanger) to produce a first subcooled condensed refrigerant stream 217. A second portion of the first condensed refrigerant stream 215 is subcooled in a second multi-stream heat exchanger 250 against evaporating refrigerant to produce a second subcooled condensed refrigerant stream 255. A third portion of the first condensed refrigerant stream 215, which is shown as part of the second subcooled condensed refrigerant stream 255, is even further subcooled in a third multi-stream heat exchanger 280 against evaporating refrigerant to form a third subcooled condensed refrigerant stream 285. Warm dried feed gas 35 is cooled (and optionally partially condensed) in the second multi-stream heat exchanger 250 and third multi-stream heat exchanger 280 sequentially. The non-condensed refrigerant stream 212 is sequentially condensed and subcooled in the second multi-stream heat exchanger 250 and the third multi-stream heat exchanger 280 against evaporating refrigerant to produce a second condensed refrigerant stream 218. The second condensed refrigerant stream 218 is expanded in expansion device 270 to a first low pressure to produce an expanded stream 275. The expanded stream 275 is fed to a fourth multi-stream heat exchanger 300 to partially condense the first CO₂-depleted flash gas 52 (HP flash gas) from the first phase separator 50 of the cryogenic system to produce a heated expanded stream 305. This partially condensed stream is separated in a third phase separator 310 of the cryogenic unit to produce a second HP flash gas 312 and a liquid condensate 317. The second HP flash gas 312 is heated sequentially in the fourth multi-stream heat exchanger 300 and the cold box 40 (first multi-stream heat exchanger) and exits the system as warmed HP flash gas 57. The liquid condensate 317 is expanded to the pressure of the second phase separator 70 by expansion device 318 and mixed with the second CO₂-rich condensate 75 (liquid phase from second phase separator 70) and directed to either the distillation column 150 if present (as shown in FIG. 8) or the second phase separator 70.

At least a portion (full portion is shown in FIG. 8) of first subcooled condensed refrigerant stream 217 is expanded to approximately the same first low pressure by expansion device 220 to produce a mixed phase stream 225 having a sharp temperature decrease to below the (partial) condensation temperature of the warm dried feed gas 35. The third subcooled condensed refrigerant stream 285 is expanded by expansion device 290 to the same first low pressure as mixed phase stream 225 and then combined with mixed phase stream 225 and heated expanded stream 305 (in any order) to produce a combined stream 292.

The second subcooled condensed refrigerant stream 255 (that is not sent to the third multi-stream heat exchanger 280) is expanded to a second low pressure (e.g. lower than the first low pressure) by expansion device 260 to produce a second mixed phase stream 265 having a sharp temperature decrease to below the (partial) condensation temperature of the warm dried feed gas 35. In some embodiments, at least one portion of the subcooled condensed refrigerant stream 255 can be expanded to a low pressure to produce a mixed phase stream at a temperature below the (partial) condensation temperature of the warm dried feed gas 35 and is used for cooling, while the other portions of the subcooled condensed refrigerant stream do not (necessarily) achieve a temperature below the (partial) condensation temperature of the warm dried feed gas 35. The second mixed phase stream 265 is evaporated (e.g., at least partially evaporated or fully evaporated) against the dried feed gas 35 in the second multi-stream heat exchanger 250 to produce an evaporated stream 266.

The combined stream 292 is evaporated (e.g., at least partially evaporated or fully evaporated) against the dried feed gas 35 in the third multi-stream heat exchanger 280 to produce a combined evaporated stream 293. The combined evaporated stream 293 is compressed in a first compressor (stage) 231 to the second low pressure and mixed with the evaporated stream 266 to form a recombined stream 268. The recombined stream 268 is compressed by a second compressor (stage) 230 to produce a further compressed stream 233 which can, in some embodiments, be at the high pressure of the system. In embodiments not shown in FIG. 8 that use multiple portions of the condensed refrigerant stream, the compression and combinations steps are repeated until all portions are combined and compressed to the high system pressure. The further compressed stream 233 is cooled back to the condensation temperature in a heat exchanger 240 and returned to the condenser 210 to complete the loop. Additionally, where a distillation column 150 is used in the disclosed process, the column reboiler 160 can be integrated with the feed to the third multi-stream heat exchanger 280, bypassing the third multi-stream heat exchanger 280 as shown in FIG. 8, the cold box 40, the second multi-stream heat exchanger 250, the third multi-stream heat exchanger 280, or any combinations thereof, for example.

In the embodiments related to FIG. 8, the column reboiler 160 output (where a distillation column 150 is used in the process) can be integrated with only the first phase separator 50 (e.g., the top of the first phase separator 50). Streams 57 and 100 exiting and stream 15 entering the system of FIG. 8 can be interpreted as the streams with the same numbers in other embodiments.

### Refrigerant

In some embodiments, the refrigerant can be any mixed refrigerant combination with two or more components, sufficient to cool down the dried feed stream 35 to temperatures below -35 °C. In some embodiments, the mixed refrigerant can be a light hydrocarbon and CO₂ combination, such that condensation and evaporation condition requirements (e.g., temperature and pressure) are met.

Using CO₂ as mixed refrigerant component in some embodiments can allow for lower requirements for external refrigerant consumption and storage, for example. While CO₂ has been recognized as a refrigerant, CO₂ is typically used in an open-loop refrigeration circuit. In such open-loop refrigeration circuits, at least a portion of a liquid CO₂ product is constantly being evaporated (e.g., against a condensing feed stream) and then treated in a separate unit (liquefaction or compression) or recycled back to a cryogenic unit. For example, an initial amount of CO₂ is used and starts circulating in the refrigerant loop going through the compression, condensation, expansion, and/or evaporation process in a closed circuit, and only a small make-up amount of CO₂ might be used.

### Dryer Configurations

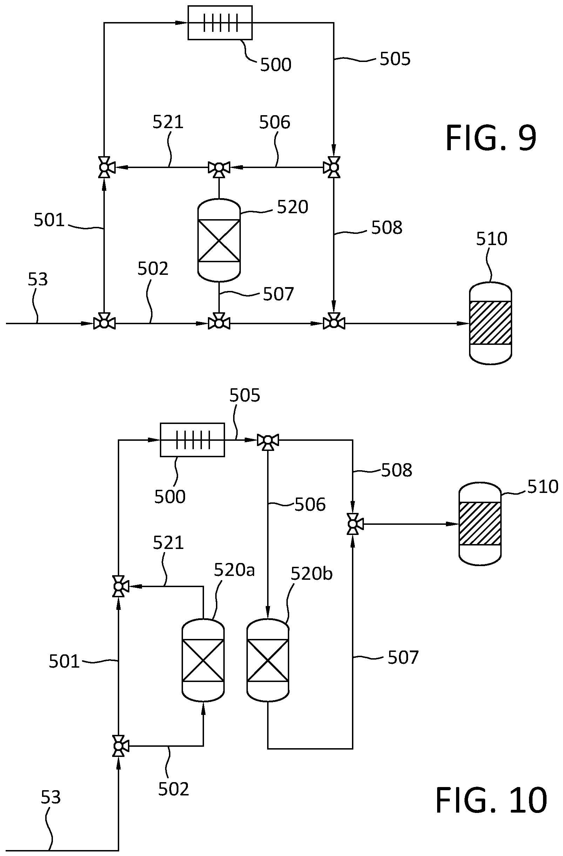

Depending on the layout of the temperature swing adsorption-based (TSA) dryer unit, different process schemes can be used in various embodiments. FIG. 9 shows embodiments of TSA dryer units with at least 2 adsorber vessels of which one is configured for successive adsorption and regeneration steps (phases). Only the adsorber vessel in regeneration 520 is shown in FIG. 9, as the other adsorber vessel(s) is in the drying step. A portion 501 of the first CO₂-depleted flash gas (warm HP flash gas) 53 is heated in a heater 500 in the hydrogen manufacturing unit to produce a hot HP flash gas 505 of which at least a portion is used as heating medium stream 506, with the spent heating medium stream 507 and the remainder hot stream 508 being recycled to the reformer/reforming section 510 for additional dry and steam reforming reactions. During the heating step, the adsorber vessel in regeneration 520 can release the desorbed water into spent heating medium stream 507 that will recycle the water as process steam to the reformer/reforming section 510. During this time, the remaining portion of the warm HP flash gas 502 that is not used for heating the TSA dryer adsorber vessel in regeneration 520 is recycled directly to the reforming section 510. When the heating phase is completed, a portion 502 (which can be the same or different than the portion recycled directly to the reforming section during the heating phase) of the warm HP flash gas 53 will first be used as a coolant, before being mixed with the remainder portion 501 and then sent for heating in a heater 500 in the hydrogen manufacturing unit and being recycled to the reformer/reforming section 510 via bypass 508.

FIG. 10 shows embodiments of TSA dryer units with separate adsorber vessels 520a and 520b configured for parallel heating and cooling steps (phases). The cooling step can use at least a portion 502 of the first CO₂-depleted flash gas (warm HP flash gas) 53 as a coolant for the TSA Dryer adsorber vessel 520a in cooling step. The spent coolant gas 521 is mixed back with the remainder 501 of the warm HP Flash gas 53 and heated in a heater 500 in the hydrogen manufacturing unit to produce a hot HP Flash gas 505. At least a portion 506 of the hot HP Flash gas is then used for heating the TSA Dryer adsorber vessel 520b in a heating step to produce a spent hot HP Flash gas 507, and the spent hot HP Flash gas 507 is combined with the remainder of the hot HP Flash gas 508 and recycled to the reformer/reforming section 510. The spent hot HP Flash Gas 507 can contain the water desorbed from the adsorber vessel 520b in a heating step and recycles it back to the reformer/reforming section 510 as process steam.

### Additional Options for Increased CO₂ Capture Rate and Full Integration

In some embodiments, at least a portion of the warm HP Flash gas 56 is sent to a CO₂ recovery unit 48 that can recover substantially all of the CO₂ in the warm HP Flash gas to produce a stream 51 enriched in recovered CO₂. In some embodiments, the stream enriched in recovered CO₂ can be recycled back to the cryogenic section, upstream or downstream of the feed inlet compressor, depending on its pressure. In some embodiments, the remaining light gas components from the warm HP flash stream can be recovered in a separate residual gas stream 54 that can be used as fuel in the hydrogen manufacturing unit. In some embodiments, the CO₂ recovery unit can be a solvent wash system that is selective for CO₂ (e.g., amine or chilled methanol-based), an adsorption-based system that is selective for CO₂ (pressure, temperature or electro swing adsorption, or a combination thereof), a membrane unit selective for the permeation of CO₂, or any combination thereof. Increasing the CO₂ capture rate of the hydrogen manufacturing unit can reduce the carbon intensity of the generated hydrogen product.

In other embodiments, the residual stream 54 from the CO₂ recovery unit containing the remaining light gas components can be fed to a low-carbon fuel recovery unit. The low-carbon fuel recovery unit can recover the low-carbon molecules as a carbon-depleted stream that can be used as make-up fuel in the hydrogen manufacturing unit, while rejecting the carbon containing molecules to produce a carbon-enriched stream that can be recycled as a feed to the reforming section in the hydrogen manufacturing unit. In some embodiments, the low-carbon fuel recovery unit can be a PSA unit selective for the adsorption of carbon species, a membrane unit selective for the permeation of hydrogen, or a combination thereof. Reducing the carbon content of the make-up fuel to the hydrogen manufacturing unit fired heater can reduce the carbon emissions from the hydrogen manufacturing unit and lower the carbon intensity of the generated hydrogen product.

In still other embodiments, the residual stream 54 from the CO₂ recovery unit containing the remaining light gas components can be fed to an inert gas rejection unit (IGRU). The inert gas rejection unit can reject the inert gases nitrogen, helium and argon from the residual stream, optionally together with a large fraction of the hydrogen, to produce an inert-gases enriched stream that can be used as make-up fuel in the hydrogen manufacturing unit, while recovering the carbon-containing molecules CO and CH₄ as a carbon-enriched, inert-gases depleted stream that can be recycled as feed to the reforming section in the hydrogen manufacturing unit. The inert gases rejection unit can be a PSA unit selective for the rejection of inert gases and hydrogen, a membrane unit selective for the permeation of hydrogen and inert gases, or combinations thereof. Rejection of inert gases from the recycle loop of hydrocarbons back to the reforming section can eliminate the accumulation of these inert gases in the hydrogen manufacturing unit and reduce the power consumption of the recycle compressors.

Some embodiments involve generating a make-up fuel stream for the hydrogen manufacturing unit. This make-up fuel stream may, in some embodiments, be used for the regeneration of the TSA dryer vessel as an alternative to the warm HP Flash Gas, for example. For example, utilizing this fuel gas stream as the coolant medium for the TSA Dryer vessel in its cooling step could recover the heat towards a fuel stream. Pre-heating a fuel stream can reduce the required duty to be delivered by the furnace and the fuel demand, which can be beneficial to the energy efficiency of the hydrogen manufacturing unit.

The foregoing description of certain examples including the illustrated examples and process simulations above, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples. Any elements (e.g. streams and equipment) shown in any of the figures are not intended to be limiting (e.g., elements shown in some figures and not others) and are only exemplary embodiments. In addition, any reference in the claims to previously-mentioned specific equipment or processes, for example by number, is an example only and for clarity and should not limit the claims to that specific equipment or process.

## Claims

1. A method for processing a stream comprising residual CO₂ and at least one of H₂, Helium, CO, CH₄, N₂, Argon, or any combinations thereof, comprising:
a. dividing said stream into at least a first part and a second part,
b. using the first part as a regeneration gas for an adsorption process to regenerate an adsorber vessel loaded with adsorbed water by desorbing the adsorbed water into a spent regeneration gas stream,
c. recovering the spent regeneration gas stream as a feed to a plant applying a reforming reaction that converts CH₄ with CO₂ and/or H₂O into H₂ and CO, or a water gas shift section that converts CO and H₂O into H₂ and CO₂, or any combination thereof,
d. heating the regeneration gas or the spent regeneration gas stream, or any combination thereof with residual heat from the plant using said reforming and/or water gas shift reactions, and
e. recovering said second part of the stream.

2. The method of Claim 1, wherein the adsorption process is a Temperature Swing Adsorption [TSA] process.

3. The method of either claim 1 or 2, wherein the adsorption process contains at least two adsorber vessels, of which at least one adsorber vessel is in regeneration, and comprises:
a. routing the first part of the stream comprising residual CO₂ as regeneration gas to bypass the adsorber vessel in regeneration (when the adsorber vessel in regeneration is to be heated), heating the regeneration gas with residual heat from the plant, and feeding the hot regeneration gas to the adsorber vessel in regeneration (when the adsorber vessel in regeneration is to be heated), collecting the spent regeneration gas and routing the spent regeneration gas to the reforming or water gas shift sections or combinations thereof via dedicated passageways;
b. routing the first part of the stream comprising residual CO₂ as regeneration gas to enter the adsorber vessel in regeneration (when the adsorber vessel in regeneration is to be cooled), collecting the spent regeneration gas, and routing the heated spent regeneration gas to the reforming or water gas shift sections or combinations thereof via dedicated passageways after heating the spent regeneration gas with residual heat from the plant;
c. optionally completely bypassing the adsorber vessel in regeneration, routing the first part of the stream comprising residual CO₂ directly to be heated, and then routing the heated first part of the steam comprising residual CO₂ to the reforming or water gas shift sections or combinations thereof, via dedicated passageways (when the adsorber vessel in regeneration is idle);
d. using the same dedicated passageways to the reforming or water gas shift sections or combinations thereof, independent of the operation of the adsorber vessel in regeneration (heating / cooling / idle),
e. using sequencing valves at the inlet and outlet of the adsorber vessel in regeneration to direct of the first part of the stream comprising residual CO₂ as needed.

4. The method of either claim 1 or 2, in which the adsorption process contains at least three adsorber vessels, of which at least two are in different stages of regeneration, and comprises:
a. routing at least a first portion of the first part of the stream comprising residual CO₂ as regeneration gas to enter an adsorber vessel in regeneration to be cooled, collecting the spent regeneration gas,
b. heating the spent regeneration gas and the remaining portion of the first part of the stream comprising residual CO₂ to produce a heated regeneration gas,
c. routing at least part of the heated regeneration gas to an adsorber vessel in regeneration to be heated and collecting the spent heated regeneration gas and routing it with the remainder of the heated regeneration gas to the reforming or water gas shift sections or combinations thereof via dedicated passageways;
d. utilizing sequencing valves at the inlets and outlets of the adsorber vessels in regeneration to be heated and cooled to direct the streams as needed.

5. The method of any of the preceding claims in which the stream comprising residual CO₂ is generated in a hydrogen manufacturing plant, wherein the hydrogen manufacturing plant comprises:
a. a syngas production unit,
b. a water gas shift unit,
c. a heat recovery section,
d. a H₂ purification section,
e. a compressor,
f. a temperature swing adsorption [TSA] dryer,
g. a cold box (multi-stream heat exchanger) with a refrigeration system, wherein the refrigeration system comprises:
i. a mixed refrigerant working fluid, comprising at least two components, and
ii. a refrigerant loop with at least two different pressure levels,
h. a first phase separator generating the stream comprising residual CO₂ and a first condensate,
i. optionally an expansion valve configured to expand the first condensate from the first phase separator, and
j. at least one of a second phase separator and a distillation column, and
k. a system to recover at least a portion of the stream comprising residual CO₂ and use that portion of the stream to regenerate the temperature swing adsorption dryer.

6. The method of any of the preceding claims in which the stream comprising residual CO₂ is generated in a hydrogen manufacturing plant, comprising:
a. a syngas production unit,
b. a water gas shift unit,
c. a heat recovery section,
d. a H₂ purification section,
e. a compressor,
f. a temperature swing adsorption [TSA] dryer,
g. a cold box (multi-stream heat exchanger) with a refrigeration system, wherein the refrigeration system comprises:
i. a mixed refrigerant working fluid, comprising at least two components, and
ii. a refrigerant loop with at least two different pressure levels,
h. a first phase separator generating a first vapor and a first condensate,
i. optionally an expansion valve configured to expand the first condensate from the first phase separator,
j. at least one of a second phase separator, and a distillation column,
k. a CO₂ recovery system separating the first vapor into a stream enriched in at least one of H₂, Helium, CO, CH₄, N₂, Argon and containing residual CO₂, and a second stream depleted in at least one of H₂, Helium, CO, CH₄, N₂, Argon, and
l. a system to recover at least a portion of the stream enriched in at least one of H₂, Helium, CO, CH₄, N₂, Argon and containing residual CO₂, and use it to regenerate the temperature swing adsorption dryer.

7. The method of claim 6, wherein the CO₂ recovery system is a pressure swing adsorption system.

8. The method of any one of claims 5-7, wherein the distillation column is operated without an overhead condenser.

9. The method of any one of Claims 5-8, wherein the syngas production unit comprises a reformer; optionally, wherein the reformer comprises an SMR, an ATR, a POX, a heat-exchanger reformer installed in series, a heat-exchanger reformer installed in parallel, or any combination thereof.

10. The method of any one of claims 5-9, further comprising a heat exchanger after the compressor configured to chill a compressed feed stream.

11. The method of any one of claims 5-10, wherein the cold box is configured to cool a dried feed stream at least partially using an overhead vapor stream from the distillation column, the first phase separator, the second phase separator, or any combination of vapor streams thereof.

12. The method of any one of claims 5-11, wherein the wherein the multi-stream heat exchanger is configured to use a condensate from the second phase separator or a bottoms stream from the distillation column to chill the compressed feed stream.

13. The method of any one of claims 5-12, wherein the cold box and first phase separator are configured to at least partially condense CO₂ in a single stage.

14. The method of any one of claims 5-13, wherein the refrigeration system is configured to operate at three or more pressure levels.

15. The method of any one of claims 5-14, wherein the refrigeration package comprises a mixed refrigerant working fluid comprising CO₂.
